# EUROPEAN PATENT APPLICATION

(11) **EP 0 718 027 A1**
(43) Date of publication of application: **26.06.1996**
(21) Application number: 95119994.2
(22) Date of filing: 18.12.1995
(51) Int. Cl.: B01D 53/88, B01D 53/86, F01D 5/28

(54) **Catalyst-containing heat-insulated member and gas turbine provided with the same**

(30) Priority: 20.12.1994 JP 316257/94
(71) Applicant: HITACHI, LTD., Chiyoda-ku, Tokyo 101 (JP)
(72) Inventor: Yasutomi, Yoshiyuki, Mito-shi, Ibaraki 310 (JP); Sawai, Yuichi, Hitachi-shi, Ibaraki 316 (JP); Fukui, Yutaka, Hitachi-shi, Ibaraki 316 (JP); Fujiwara, Tetsuo, Hitachi-shi, Ibaraki 319-12 (JP); Tamaki, Hideki, Hitachi-shi, Ibaraki 316 (JP); Wada, Katsuo, Hitachi-shi, Ibaraki 317 (JP)
(74) Representative: Patentanwälte Beetz - Timpe - Siegfried Schmitt-Fumian - Mayr

(57) **Abstract**

The surfaces of parts to be exposed to a combustion gas and structural members (3) on which the combustion gas impinges are coated with a catalyst(1)-containing heat insulating layer (2) having a heat insulating function and a catalytic function to remove harmful components including nitrogen oxides and the like contained in the combustion gas without reducing combustion efficiency and increasing pressure loss.

## Description

### BACKGROUND OF THE INVENTION

### (1) FIELD OF THE INVENTION

The present invention relates to a catalyst-containing heat-insulated member coated with a layer of a corrosion-resistant, catalyst-containing heat insulating material capable of efficiently removing nitrogen oxides and carbon monoxide contained in a high-temperature combustion gas produced by combustion in a gas turbine or the like for power plants, aircraft or automobiles without using any catalyst support, such as a filter, and having a heat insulating property.

### (2) DESCRIPTION OF THE INVENTION

Nitrogen oxides and carbon monoxide are produced when fuel is burned in a gas turbine, a jet engine or the like. From the view point of environmental protection, it is desired to convert nitrogen oxides and carbon monoxide efficiently into harmless substances. A method of recovering nitrogen oxides and carbon monoxide disclosed in Japanese Patent Laid-Open No. Hei 2-258069 (1990) uses a denitrating honeycomb filter carrying a denitrating catalyst and disposed in the exhaust system and passes an exhaust gas through the denitrating honeycomb filter to reduce nitrogen oxides contained in the exhaust gas into ammonia for nitrogen oxides removal. A combustion method disclosed in Japanese Patent Laid-Open No. Sho 59-26140 (1984) uses a honeycomb filter carrying a combustion catalyst and combined with a combustor to reduce the production of nitrogen oxides by the combustor.

The components of gas turbines including blades and nozzles are protected from highly corrosive environment by coatings of highly corrosion-resistant alloys and ceramic materials formed by spraying and shielded from heat by coatings of ceramic materials formed by spraying.

### SUMMARY OF the Invention

The foregoing prior art that passes a gas through a filter of a honeycomb structure or the like and carrying a catalyst to remove the harmful components, such as nitrogen oxides, of the gas entails pressure loss in the compressed gas. The filter must have further smaller pores or an increased number of filters must be used to remove the harmful components, such as nitrogen oxides, of the gas, which reduces combustion efficiency and increases costs.

Accordingly, it is an object of the present invention to remove the harmful components, such as nitrogen oxides, of a combustion gas without increasing pressure loss and without reducing combustion efficiency by combining a catalyst-containing heat insulating material having heat insulating effect and catalytic effect with parts to be exposed to the combustion gas and structural members on which the combustion gas impinges.

### BRIEF DESCRIPTION OF THE DRAWINGS

Fig. 1 is a typical sectional view of a catalyst-containing heat-insulated member in a preferred embodiment according to the present invention.

Fig. 2 is a typical sectional view of a catalyst-containing heat-insulated member in a preferred embodiment according to the present invention.

Fig. 3 is a perspective view of a stationary blade coated with a catalyst-containing heat insulating layer in accordance with the present invention.

Fig. 4 is a partly sectional typical front view of a gas turbine embodying the present invention.

Fig. 5 is a typical sectional view of a catalyst-containing heat-insulated member in a preferred embodiment according to the present invention.

Fig. 6 is a perspective view of a moving blade coated with a catalyst-containing heat insulating layer of the present invention.

Fig. 7 is a diagrammatic view of assistance in explaining the basic cycle of an automotive gas turbine.

Fig. 8 is a graph showing the relation between catalyst content and catalytic effect.

Fig 9 is a perspective view of a combustor embodying the present invention.

Fig. 10 is a typical sectional view of a combustor embodying the present invention.

### DESCRIPTION OF THE PREFERRED EMBODIMENTS

With the foregoing object in view, the present invention coats the surfaces of structural members exposed to a high-temperature combustion gas or on which the combustion gas impinges with a heat insulating material containing catalysts for removing nitrogen oxides and carbon monoxide contained in the combustion gas to use the heat insulating effect and the catalytic effect of the heat insulating material containing catalysts simultaneously.

The heat insulating material is an oxide having a small thermal conductivity, such as Zr oxide, Al oxide, Si oxide or the like, and contains at least one of nitrogen oxides removing catalysts including metals including Pt, Pd, Rh, Ru, Ir, Os, Fe, Co, Ni, Ti, Cu, V, Cr, Mo, W, Ce, Sc, Y, Hf, Nb, Ta, Mn, Re, Au, Ag, La, Pr, Nd, Sm, Eu, Gd, Tb, Dy, Ho, Er, Tm, Yb and Lu and the oxides of those metals and/or at least one of carbon monoxide removing catalysts including V, W, La, Cu, Fe, Sn, Ni, Zn, Cr and Ba and the oxides of those metals. The heat insulating material is at least one of alumina, zirconia, titania, ceria, magnesia, mullite and silica. The heat insulating material has the action of an active substance.

Materials having abrasion resistance and corrosion resistance at high temperatures are those capable of forming parts of gas turbines for power generation and gas turbines for automobiles, having abrasion resistance and corrosion resistance capable of maintaining the normal functions of those parts during the period of periodic inspection. Such materials contain at least one of alumina, zirconia, titania, magnesia, mullite and silica. The selection of the material is dependent on the condition of the environment in which the part is used.

In a combined cycle power plant comprising a gas turbine driven by a high-velocity high-temperature gas, an exhaust heat recovery boiler using the energy of the exhaust gas of the gas turbine for generating steam, a steam turbine driven by the steam generated by the exhaust heat recovery boiler, and a power generator driven by the gas turbine and the steam turbine, the present invention reduces the nitrogen oxide concentration of the combustion gas to about 10 ppm by coating the parts of the gas turbine with a heat insulating material containing a catalyst. The nitrogen oxide concentration of the combustion gas can be reduced to several parts per million by further treating the combustion gas by a denitrating catalyst.

The present invention is able to reduce the nitrogen oxide concentration of the exhaust gas of a gas turbine for an automobile to about 10 ppm by coating the parts of at least one of the combustor, turbine, heat exchanger and exhaust pipe of the gas turbine with a heat insulating material containing a catalyst. The nitrogen oxide concentration of the exhaust gas can be reduced to several parts per million by further treating the exhaust gas by a catalytic filter.

The present invention is capable of reducing the nitrogen oxide concentration and the carbon monoxide concentration of a combustion gas used by power plants, aircrafts and automobiles in a driving system by a catalyst, capable of reducing the concentrations at the inlet of a catalytic filter to half or less of the concentrations that can be achieved by the prior art, and the concentrations at the outlet of the catalytic filter can be further reduced.

The present invention is capable of efficiently removing nitrogen oxides and carbon monoxide contained in a high-temperature combustion gas produced by combustion in a gas turbine or the like without using a catalyst support, such as a honeycomb filter.

A combustion gas contains harmful gases including nitrogen oxides, hydrogen and hydrocarbons. The catalyst promotes the oxidation reaction and the reduction reaction of the harmful gases for converting nitrogen oxides, carbon monoxide, hydrogen and hydrocarbons into water, nitrogen and carbon dioxide. In a gas turbine, a reduction catalyst can be further activated by mixing ammonia into the combustion gas. From the viewpoint of the catalytic effect and corrosive effect of ammonia, an appropriate NH₃ concentration of the combustion gas is in the range of 3 to 500 ppm.

For example, when the parts of at least one of the combustor, turbine and exhaust system of a gas turbine using a combustion gas for driving a turbine for rotation are coated with the heat insulating material containing a catalyst of the present invention, the combustion gas comes into direct contact with the heat insulating material containing a catalyst, and thereby nitrogen oxides and carbon monoxide contained in the combustion gas can be removed efficiently without reducing the pressure of the combustion gas flowing through the system. The catalytic effect of the heat insulating material can be particularly efficiently exerted when used for coating the moving blades, stationary blades and disk of the turbine because the combustion gas impinges directly on those components of the turbine.

Particularly, when the surfaces of the parts of the combustor, transition pieces for the combustor, bypass valve, moving blades of the turbine, stationary blades of the turbine, turbine disk, spindle bolts, turbine casing, pipes of the heat exchanger, shroud, diffuser cone, walls of the turbine exhaust wheel and duct of a gas turbine using a combustion gas to drive the turbine for rotation, are coated with the heat insulating material containing a catalyst of the present invention, the nitrogen oxides concentration of the combustion gas at the inlet of the denitrating catalyst can be reduced to about 10 ppm.

The parts of the combustor, turbine and exhaust system of a gas turbine are coated with a heat shielding ZrO₂ film formed by spraying to prevent the corrosion of those parts by the high-temperature combustion gas. The present invention uses a heat insulating material containing a catalytic material for coating those parts, which can be achieved by a simple process at a low cost.

A preferable catalyst content of the heat insulating material in accordance with the present invention is in the range of 10 to 80 vol.%. The catalytic effect is not satisfactorily high when the catalyst content is lower than 10 vol.% and the heat insulating effect is not satisfactorily high when the catalyst content is greater than 80 vol.%. The catalyst content of the heat insulating material must be determined so that the thermal conductivity of a heat insulating layer in accordance with the present invention is 0.4178 J/cm·s·°C (0.1 cal/cm·sec·° C)or below. An appropriate catalyst content to make both the catalytic effect and the heat insulating effect of the heat insulating material effective is in the range of 20 to 50 vol.%.

According to the present invention, the thickness of the heat insulating layer of the catalyst-containing heat insulating material is in the range of 5 µ m to 2 mm. A thickness smaller than 5 µ m reduces the heat insulating effect. Although there is no problem in a heat insulating layer of a thickness greater than 2 mm, the thickness of 2 mm or below is preferable because a heat insulating layer of a thickness greater than 2 mm is costly and may peel off the base.

According to the present invention, the surface of a structural member of a metal or a ceramic material can be coated with a heat insulating layer of a catalyst-containing heat insulating material by depositing the catalyst-containing heat insulating material prepared by mixing a heat insulating material and a catalyst or catalysts by a method including at least one of processes for spraying, CVD, coating, ion implantation, PVD, lamination, CVI and impregnation. A method employing a spraying process and a subsequent catalyst impregnation process is particularly preferable because this method can be carried out at a low cost. Since a catalyst having smaller particle size has a greater specific surface area, a desirable particle size is 1 µ m or below, preferably, 100 nm or below. An amorphous catalyst can be used by a sol-gel method, such an amorphous catalyst is crystallized or oxidized and becomes effective when exposed to the heat of a combustion gas.

The present invention is able to remove nitrogen oxides and carbon monoxide efficiently without reducing the pressure of the combustion gas by applying the catalyst-containing heat insulating material to the structural members to be in direct contact with the combustion gas of the combustor, turbine and exhaust system of a gas turbine in which the turbine is driven for rotation by the combustion gas, and is effective in constructing a low-pollution, high-efficiency gas turbine. Since the combustor, moving blades of the turbine, stationary blades of the turbine and turbine disk are in direct contact with the combustion gas, the use of those members coated with a heat insulating layer of a catalyst-containing heat insulating material provides efficient catalytic effect.

The parts of the combustor, turbine and exhaust system of a gas turbine are coated with a film of a heat insulating material, such as ZrO₂, by spraying to protect those parts from corrosion by a high-temperature combustion gas. The present invention adds a catalytic material to the heat insulating material to form a catalyst-containing heat-insulated member by a simple process at a low cost. The heat insulating material containing a catalytic material has both heat insulating effect and catalytic effect. The present invention is capable of reducing the nitrogen oxide concentration and the carbon monoxide concentration of a combustion gas used by power plants, aircrafts and automobiles in a driving system by a catalyst to reduce the air polluting potential of the combustion gas effectively.

The present invention will be further concretely described hereinafter.

### EXAMPLE 1.

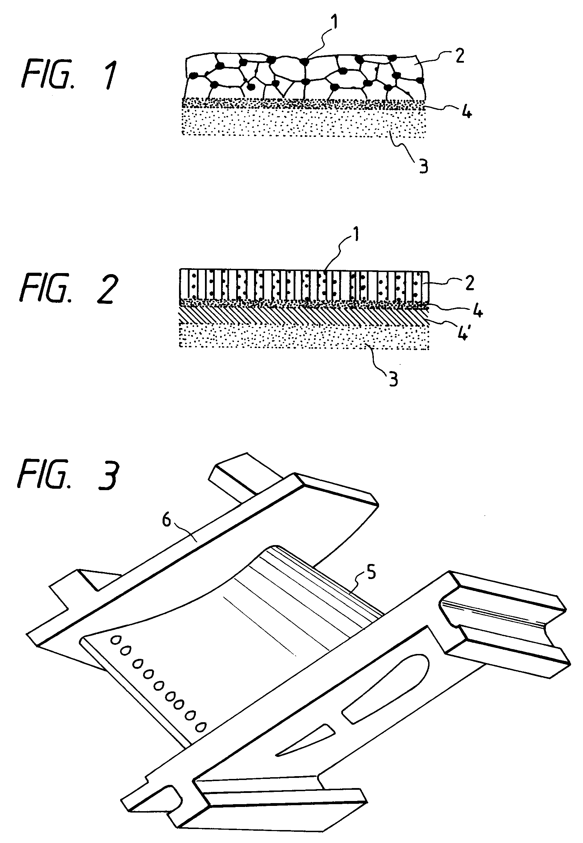

Referring to Fig. 1 typically showing a catalyst-containing heat-insulated member in a first embodiment according to the present invention, the surface of a 50 mm diameter, 3 mm thick base member 3 internally provided with an air-cooling structure and formed of Hastelloy-X (Cr, 22 wt.%; Co, 1.5 wt.%; Mo, 9 wt.%; Fe, 19 wt.%; C, 0.1 wt.%; Ni, remainder), i.e., an, Ni-base alloy, was degreased, and the surface of the base member 3 was coated with a 20 µ m thick bonding layer 4 of a CoNiCrAlY alloy (MCrAlY) having an excellent corrosion resistance by plasma spraying in an Ar atmosphere of 200 torr having an oxygen partial pressure of 10-3 atm by using an output power of 40 kW. Then, the surface of the bonding layer 4 was coated with a 50 µ m thick heat insulating layer of a heat insulating material 2 of ZrO₂ (Y₂O₃, 8 wt.%) and a catalyst 1 of 30 vol.% CoO by spraying in the atmosphere at an output of 50 kW. The particle size of CoO was 0.5 µ m. Then, the thus coated base member 3 was heat-treated in a vacuum at 1060° C for 10 hr for dispersion between the base member 3 and the bonding layer 4 to complete the catalyst-containing heat-insulated member. The catalyst 1 was dispersed uniformly in the heat insulating material 2 in the coating layer.

The catalytic effect of the catalyst-containing heat-insulated member was examined. The air-cooled, catalyst-containing heat-insulated member was placed in a 55 mm inside diameter pipe, a 1300° C combustion gas produced by burning propane gas and containing 50 ppm nitrogen oxides, 6 % carbon monoxide and 2 % hydrocarbons was blown against the catalyst-containing heat-insulated member at a flow velocity of 1 m/sec, and the nitrogen oxide concentration and the carbon monoxide concentration of the combustion gas were measured at the outlet of the pipe. The measured nitrogen oxide concentration was 15 ppm and the measured carbon monoxide concentration was 3 %, which were less than halves of the initial nitrogen oxide concentration and the initial carbon monoxide concentration of the combustion gas, respectively. The measurement proved that the catalyst-containing heat-insulated member of the present invention is effective in reducing the nitrogen oxide concentration and the carbon monoxide concentration of the combustion gas. The thermal conductivity of the catalyst-containing heat-insulated layer was 0.04178 J/cm·s·°C (0.01 cal/cm·sec·° C). The nitrogen oxide concentration was reduced to 8 ppm or below by further passing the combustion gas through a denitrating catalyst of 50 % in denitrating ratio. When the combustion gas was passed directly through the denitrating catalyst of 50 % in denitrating ratio for comparison, the nitrogen oxide concentration was reduced only to 25 ppm. The same experiments were conducted for a comparative heat-insulated member formed by coating a base member of Hastelloy-X with a bonding layer of the CoNiCrAlY alloy and a heat insulating layer of ZrO₂ not containing any catalyst. The comparative heat-insulated member reduced the nitrogen oxide concentration to 45 ppm and the carbon monoxide concentration to 5.5 %, and the CoNiCrAlY alloy deposited on the surface, which proved that the comparative heat-insulated member was fairly effective, but not as remarkably effective as the catalyst-containing heat-insulated member of the present invention.

The catalytic effect of ZrO₂ was not affected by the crystal structure of ZrO₂; ZrO₂ of the tetragonal system, ZrO₂ of the orthorhombic system and ZrO₂ of the cubic system were the same in catalytic effect. In view of stability of the coating layer, it is preferable to use stabilized ZrO₂.

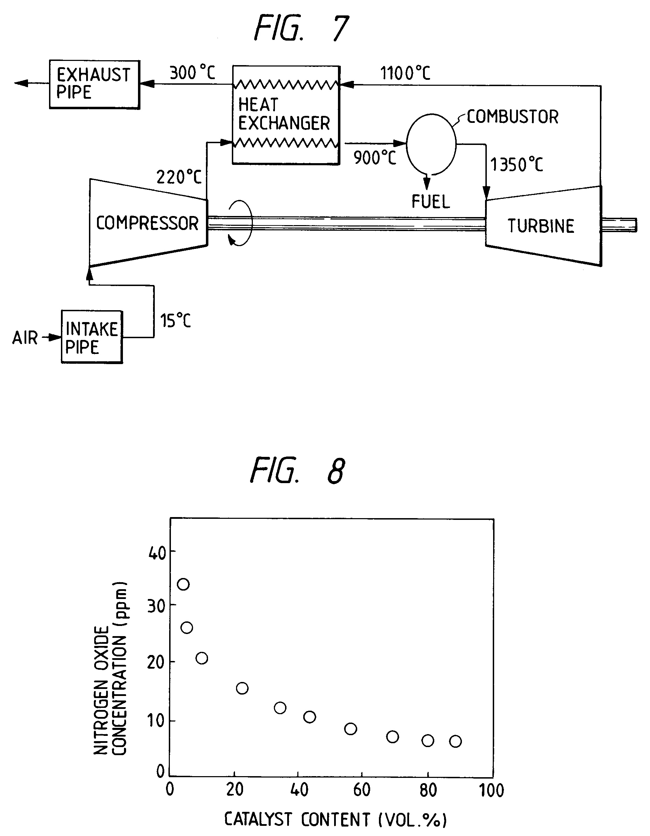

The catalytic effects of heat insulating layers having different catalyst contents, i.e., CoO contents, respectively, were examined through experiments. The results of the experiments are shown in Fig. 8. As is obvious from Fig. 8, catalyst contents not lower than 10 vol.% are effective. Catalyst contents exceeding 80 vol.% cause problems in corrosion resistance. Therefore appropriate catalyst contents are in the range of 10 to 80 vol.%.

### EXAMPLE 2.

Sample catalyst-containing heat-insulated members provided with heat insulating layers shown in Tables 1 and 2 instead of the coating layer of ZrO₂ (8 wt.% Y₂O₃)-30 vol.% CoO of the catalyst-containing heat-insulated member in the first embodiment were fabricated by the same processes as those employed in fabricating the first embodiment and their catalytic effects were examined. The coating layers containing metals were formed by spraying in a vacuum. The examination proved that the catalyst-containing heat-insulated members are effective.

### EXAMPLE 3.

Referring to Fig. 2 typically showing a catalyst-containing heat-insulated member in a third embodiment according to the present invention, the surface of a 50 mm diameter, 3 mm thick base member 3 internally provided with an air-cooling structure and formed of silicon carbide (B₄C, 2 wt.%; SiC, remainder), i.e., a ceramic material, was subjected to thermal oxidation at 1400° C for 1 hr in the atmosphere to form a 5 µ m thick bonding layer 4' of SiO₂, and the surface of the bonding layer 4' was coated with a 10 µ m thick layer 4 of Al₂O₃ by CVD, and the surface of the layer 4 was coated with a 30 µ m thick layer of an heat insulating material 2 of ZrO₂ (Y₂O₃, 8 wt.%) and a catalyst 1 of 30 vol.% Ni₂O₃ by spraying in the atmosphere at an output of 50 kW. The particle size of Ni₂O₃ was 0.2 µ m. The catalyst 1 was dispersed uniformly in the heat insulating material 2 in the coating layer. Catalyst-containing heat-insulated members shown in Table 3 were fabricated by similar processes and the catalyst-containing heat-insulated members were tested for nitrogen oxide removing effect.

The catalytic effect of the catalyst-containing heat-insulated member was examined. The air-cooled, catalyst-containing heat-insulated member was placed in a 55 mm inside diameter pipe, a 1500° C combustion gas produced by burning propane gas and containing 80 ppm nitrogen oxides, 8 % carbon monoxide and 3 % hydrocarbons was blown against the catalyst-containing heat-insulated member at a flow velocity of 1 m/sec, and the nitrogen oxide concentration and the carbon monoxide concentration of the combustion gas were measured at the outlet of the pipe. The measured nitrogen oxide concentration was 19 ppm and the measured carbon monoxide concentration was 3.5 %, which were less than halves of the initial nitrogen oxide concentration and the initial carbon monoxide concentration of the combustion gas, respectively. The measurement proved that the catalyst-containing heat-insulated member of the present invention is effective in reducing the nitrogen oxide concentration and the carbon monoxide concentration of the combustion gas. The thermal conductivity of the catalyst-containing heat-insulated layer was 0.12534 J/cm·s·°C (0.03 cal/cm·sec·° C). The nitrogen oxide concentration was reduced to 9.5 ppm or below by further passing the combustion gas through a denitrating catalyst of 50 % in denitrating ratio. When the combustion gas was passed directly through the denitrating catalyst of 50 % in denitrating ratio for comparison, the nitrogen oxide concentration was reduced only to 40 ppm.

Combinations of the heat insulating layer of ZrO₂ (Y₂O₃, 8 wt.%)-30 Vol.% Ni₂O₃ with the heat insulating layers shown in Table 1 show The same catalytic effect. The base member may be formed of, instead of SiC, Si₃N₄, SAIALON, Al₂O₃, ZrO₂, a particle-reinforced material, such as an SiC·Si₃N₄ composite, an Si₃N₄·TiN composite, a whisker-reinforced material or a fiber-reinforced material.

### Example 4.

The surface layer 3 of a stationary blade shown in Fig. 3 internally provided with an air-cooling structure and having a blade 5 and side walls 6 to be exposed to a combustion gas was formed of Hastelloy-X (Cr, 22 wt.%; Co, 1.5 wt.%; Mo, 9 wt.%; Fe, 19 wt.%; C, 0.1 wt.%; Ni, remainder), i.e., an Ni-base alloy, the surface of the stationary blade was degreased, and the surface of the base layer 3 was coated with a 25 µ m thick bonding layer 4 of a CoNiCrAlY alloy (MCrAlY) having an excellent corrosion resistance by plasma spraying in an Ar atmosphere of 200 torr having an oxygen partial pressure of 10⁻³ atm by using an output power of 40 kW. Then, the surface of the bonding layer 4 was coated with a 50 µ m thick heat insulating layer 2 of Al₂O₃ by CVD. Columnar Al₂O₃ crystals were formed over the bonding layer 4. The surface of the heat insulating layer 2 of columnar Al₂O₃ crystals was impregnated with a slurry containing Ni particles 1 of 0.1 µ m in particle size. Then, the thus coated base member was heat-treated in a vacuum at 1060° C for 10 hr for dispersion between the base member and the bonding layer to complete the catalyst-containing heat-insulated member. The Ni content of the heat insulating layer 2 was 40 vol.%. The catalytic effect of the catalyst-containing heat-insulated member was examined. The air-cooled, catalyst-containing heat-insulated member was placed in a 100 mm inside diameter pipe, a 1400° C combustion gas produced by burning natural gas and containing 85 ppm nitrogen oxides, 9 % carbon monoxide and 5 % hydrocarbons was blown against the catalyst-containing heat-insulated member at a flow velocity of 3 m/sec, and the nitrogen oxide concentration and the carbon monoxide concentration of the combustion gas were measured at the outlet of the pipe. The measured nitrogen oxide concentration was 16 ppm and the measured carbon monoxide concentration was 4 %, which were less than halves of the initial nitrogen oxide concentration and the initial carbon monoxide concentration of the combustion gas, respectively. The measurement proved that the catalyst-containing heat-insulated member of the present invention is effective in reducing the nitrogen oxide concentration and the carbon monoxide concentration of the combustion gas. The thermal conductivity of the catalyst-containing heat-insulated layer was 0.33424 J/cm·s·°C (0.08 cal/cm·sec·° C). The nitrogen oxide concentration was reduced to 2 ppm or below by further passing the combustion gas through a denitrating catalyst of 90 % in denitrating ratio. When the combustion gas was passed directly through the denitrating catalyst of 90 % in denitrating ratio for comparison, the nitrogen oxide concentration was reduced only to 9 ppm.

The heat insulating layer formed by CVD consists of columnar crystals and hence the heat insulating layer is more suitable for impregnation with a catalyst than heat insulating layers formed by spraying and is capable of retaining a large quantity of catalyst.

The catalyst may be formed in the heat insulating layer by impregnating the heat insulating layer with a metal, a metal oxide, a sulfate, a nitrate, an acetate or a carbonate, and by heat-treating the impregnated heat insulating layer at a high temperature.

### EXAMPLE 5.

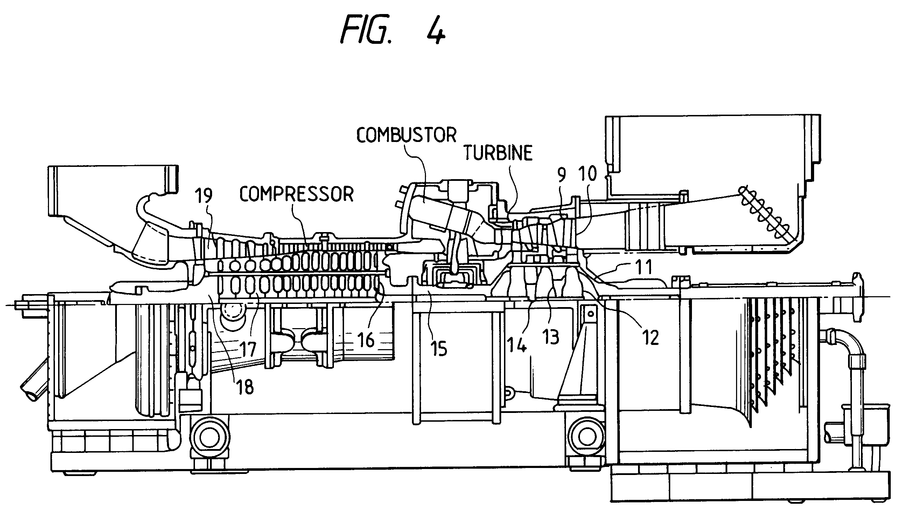

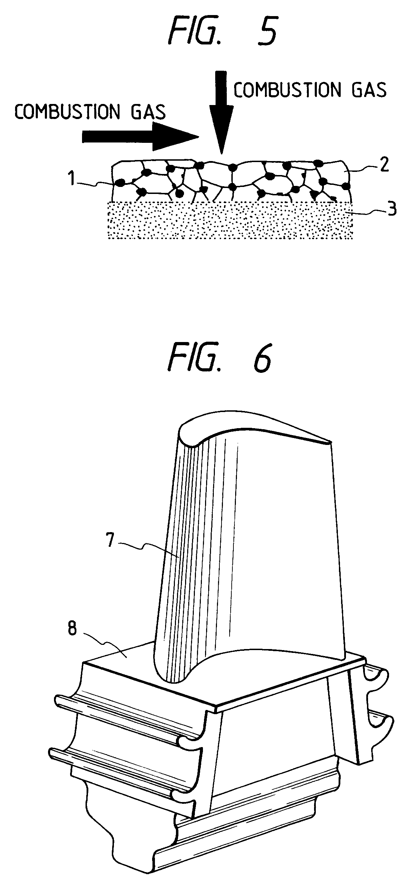

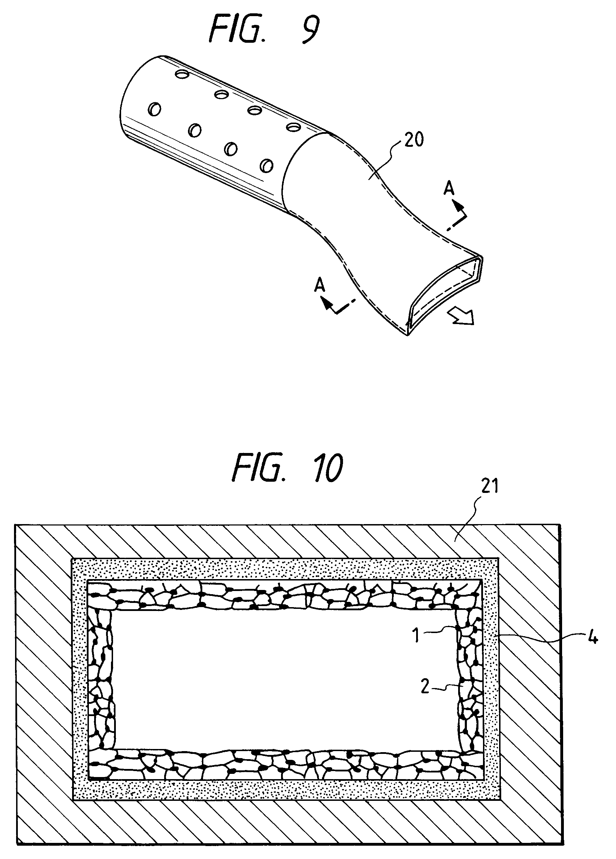

In a gas turbine shown in Fig. 4 included in a thermal power plant system and having a turbine driven for rotation by a combustion gas, the surfaces of the liner of the combustor, transition pieces of the combustor, nozzles (stationary blades) 9, turbine blades (moving blades) 10, turbine stub shaft 11, turbine disk 12, turbine spacer 13, turbine stacking bolts 14, bypass valve, spindle bolts, turbine casing, shroud, diffuser cone, turbine exhaust wheel chamber and exhaust duct of the gas turbine, were coated with catalyst-containing heat insulating layers of the catalyst-containing heat insulating material of the first embodiment, respectively. Fig. 6 shows one of the turbine blades coated with the catalyst-containing heat insulating layer, and Fig. 9 shows the liner of the combustor 20 coated with the catalyst-containing heat insulating layer.

The nitrogen oxide concentration and the carbon monoxide concentration of the combustion gas can be reduced as the combustion gas comes into contact with or impinges on the catalyst-containing heat insulating layers. Whereas the conventional method of reducing the nitrogen oxide concentration and the carbon monoxide concentration of a combustion gas passes a honeycomb filter supporting a catalyst entailing pressure loss, the present invention does not cause pressure loss because the present invention reduces the nitrogen oxide concentration and the carbon monoxide concentration through the interaction between the combustion gas and the catalyst-containing heat insulating layers coating the surfaces of the structural members as shown in Fig. 5. The turbine blades and such to be directly acted upon by the combustion gas exert efficient catalytic effect.

The gas turbine was operated for power generation by driven for rotation by a mixed gas of compressed air compressed by a compressor and a 1300° C combustion gas of 15 atm in pressure produced by burning coal-gasoficated fuel. The combustion gas contained 50 ppm nitrogen oxides, 6 % carbon monoxide, 2 % hydrocarbons, 5 % carbon dioxide and 9 % oxygen at the outlet of the combustor. After passing through the gas turbine and the exhaust system, the nitrogen oxide concentration and the carbon monoxide concentration of the combustion gas at the inlet of a catalytic denitrating device of 90 % in denitrating ratio were reduced to 18 ppm and 4 %, respectively. The nitrogen oxide concentration of the combustion gas at the outlet of the catalytic denitrating device was 2 ppm or below. The nitrogen oxide concentration and the carbon monoxide concentration of the combustion gas passed through a gas turbine having components coated with a heat insulating layer not containing any catalyst were 48 ppm and 6 %, respectively, at the inlet of the catalytic denitrating device and the nitrogen oxide concentration of the combustion gas at the outlet of the catalytic denitrating device was as high as 5 ppm. Since the denitrating ratio of the catalytic denitrating device is 90 %, the nitrogen oxide concentration at the outlet of the catalytic denitrating device is dependent on the nitrogen oxide concentration at the inlet of the catalytic denitrating device. Therefore, it was found that the catalytic effects of the combustor, turbine and exhaust system are important. The present invention can reduce the quantity of the denitrating catalyst of the catalytic denitrating device.

Similarly, the nitrogen oxide concentration and the carbon monoxide concentration of the combustion gas used by a regenerative single-shaft gas turbine for cogeneration, a regenerative two-shaft gas turbine for cogeneration, a regenerative two-shaft gas turbine for a portable power generator, an aircraft gas turbine and an automotive gas turbine can be reduced by applying catalyst-containing heat-insulated members in accordance with the present invention to those gas turbines.

Fig. 7 shows the basic cycle of an automotive gas turbine. The gas turbine comprises a combustor, a turbine including a compressor impeller, a diffuser and a scroll, a heat exchanger and an exhaust pipe. The automotive gas turbine is analogous with the gas turbine for power generation in constitution. When the surfaces of those components are coated with a catalyst-containing heat insulating material of the present invention, the nitrogen oxide concentration and the carbon monoxide concentration of the exhaust gas can be reduced to 20 ppm or below and 5 % or below, respectively.

### EXAMPLE 6.

Figs. 9 and 10 are typical perspective view and a sectional view, respectively, of a combustor 20 having an inner surface coated with a catalyst-containing heat insulating layer. The metal wall 21 of the combustor 20 was formed of Hastelloy-X (Cr, 22 wt.%; Co, 1.5 wt.%; Mo, 9 wt.%; Fe, 19 wt.%; C, 0.1 wt.%; Ni, remainder), i.e., an Ni-base alloy, the inner surface of the metal wall 21 was decreased, and then the inner surface of metal wall 21 was coated with a 25 µ m thick bonding layer 4 of a CoNiCrAlY alloy (MCrAlY) having an excellent corrosion resistance by plasma spraying in an Ar atmosphere of 267 mbar (200 torr) having an oxygen partial pressure of 10-3 atm by using an output power of 40 kW. Then, the surface of the bonding layer 4 was coated with a 50 µ m thick heat insulating layer 2 of Al₂O₃ by CVD. Columnar Al₂O₃ crystals were formed over the bonding layer 4. The surface of the heat insulating layer 2 of columnar Al₂O₃ crystals was impregnated with a slurry containing Ni particles 1 of 0.1 µ m in particle size. The Ni content of the heat insulating layer 2 was 40 vol.%. The metal wall 21 was heat-treated at 1060° C for 10 hr in a vacuum for the diffusion between the bonding layer 4 and the metal wall 21 to obtain a catalyst-containing heat-insulated member. The catalytic effect of the catalyst-containing heat-insulated member was examined by exposing the catalyst-containing heat-insulated member to a 1400° C combustion gas produced by burning natural gas, containing 85 ppm nitrogen oxides, 9 % carbon monoxide, and 5 % hydrocarbons, and flowing at a flow velocity of 2 m/sec, and the nitrogen oxide concentration and the carbon monoxide concentration of the combustion gas at the outlet of the combustor were measured. The measured nitrogen oxide concentration was 19 ppm and the measured carbon monoxide concentration was 5 %, which were less than halves of the initial nitrogen oxide concentration and the initial carbon monoxide concentration of the combustion gas, respectively. The measurement proved that the catalyst-containing heat-insulated member of the present invention is effective in reducing the nitrogen oxide concentration and the carbon monoxide concentration of the combustion gas. The thermal conductivity of the catalyst-containing heat insulating layer was 0.33424 J/cm·s·°C (0.08 cal/cm·sec·° C). The nitrogen oxide concentration was reduced to 2 ppm or below by further passing the combustion gas through a denitrating catalyst of 90 % in denitrating ratio. When the combustion gas was passed directly through the denitrating catalyst of 90 % in denitrating ratio for comparison, the nitrogen oxide concentration was reduced only to 9 ppm.

## Claims

1. A catalyst-containing heat-insulated member comprising: a structural member (3) of a metal or a ceramic material; and a heat insulating layer coating the surface of the structural member; said heat insulating layer being formed of a heat insulating material (2) containing a catalyst (1) dispersed therein.

2. A catalyst-containing heat-insulated member comprising: a structural member (3) of a metal or a ceramic material; a bonding layer (4) formed over the structural member (3); and a heat insulating layer of a ceramic material (2); said heat insulating layer containing particles of a catalyst (1) dispersed therein.

3. A catalyst-containing heat-insulated member according to claim 1 or 2, wherein the heat insulating layer is formed of a ceramic material (2) containing at least one of a Zr oxide, an Al oxide and an Si oxide.

4. A catalyst-containing heat-insulated member according to claim 1 or 2, wherein the catalyst (1) is one of catalysts for removing nitrogen oxides.

5. A catalyst-containing heat-insulated member according to claim 1 or 2, wherein the catalyst (1) is one of catalysts for removing carbon monoxide.

6. A catalyst-containing heat-insulated member according to claim 4, wherein the catalyst (1) for removing nitrogen oxides contains at least one of metals Pt, Pd, Rh, Ru, Ir, Os, Fe, Co, Ni, Ti, Cu, V, Cr, Mo, W, Ce, Sc, Y, Hf, Nb, Ta, Mn, Re, Au, Ag, La, Pr, Nd, Sm, Eu, Gd, Tb, Dy, Ho, Er, Tm, Yb and Lu and the oxides of those metals.

7. A catalyst-containing heat-insulated member according to claim 5, wherein the catalyst (1) for removing carbon monoxide contains at least one of metals V, W, La, Cu, Fe, Sn, Ni, Zn, Cr and Ba and the oxides of those metals.

8. A catalyst-containing heat-insulated member according to claim 1 or 2, wherein the catalyst (1) content of the heat insulating layer (2) is in the range of 10 to 80 vol.%.

9. A catalyst-containing heat-insulated member according to claim 1 or 2, wherein the heat insulating layer (2) has a thermal conductivity of 0.4178 J/cm·s·°C (0.1 cal/cm·sec·°C) or below.

10. A catalyst-containing heat-insulated member according to claim 1 or 2, wherein the thickness of the heat insulating layer (2) is in the range of 5 µm to 2 mm.

11. A catalyst-containing heat-insulated member according to claim 2, wherein the bonding layer is composed of a SiO₂ bonding layer (4') formed by thermal oxidation of a silicon carbide structural member (3) and an Al₂O₃ bonding layer (4) coated thereon by CVD.

12. A gas turbine comprising: a turbine driven by a high-velocity high-temperature gas; a combustor included in the turbine; and an exhaust system through which the gas discharged from the turbine flows; the surfaces of the components of said turbine, said combustor and/or the exhaust system are coated with a ceramic layer (2) containing a catalyst (1) dispersed therein.

13. A combined cycle power plant comprising: a gas turbine driven by a high-velocity high-temperature gas; an exhaust heat recovery boiler using the energy of the exhaust gas of the gas turbine for generating steam; a steam turbine driven by the steam; and a power generator driven by the gas turbine and the steam turbine; the surfaces of the components of the gas turbine being coated with a ceramic layer (2) containing a catalyst (1) dispersed therein.
